# EUROPEAN PATENT APPLICATION

(11) **EP 1 646 134 A2**
(43) Date of publication of application: **12.04.2006**
(21) Application number: 05109369.8
(22) Date of filing: 07.10.2005
(51) Int. Cl.: H02M 5/293

(54) **Circuit for an electric power supply line**

(30) Priority: 08.10.2004 BE 200400499
(71) Applicant: Ventomatic, 9820 Merelbeke (BE)
(72) Inventor: Dupont, Joseph, 8520, Kuurne (BE)
(74) Representative: Quintelier, Claude

(57) **Abstract**

Circuit for an electric supply line, consisting of an input terminal and an output terminal as well as a control unit to regulate the supply to be provided to a load, whereby between the said input and output terminal at least a first and a second driver transistor is inserted, whose source is connected to a current zero passage detector, which current zero passage detector is provided to generate a zero passage signal when detecting a zero passage of the current to the said source, which circuit further has a control signal generator provided to generate a control signal, consisting of a pulse sequence whose pulses have a variable pulse duration and whereby each pulse from the control signal has a falling edge determined on the basis of the zero passage signal, which control signal generator is connected to the gate on each driver transistor to supply the control signal.

## Description

The present invention concerns a circuit for an electric power supply line comprising a first and a second input terminal for the circuit of an electric alternating current supply and a first and a second output terminal for the circuit of a load to be supplied, which circuit further has a control unit to regulate the supply to be delivered to the load.

Such circuits are known and are used to regulate the current supply and therefore the capacity to the load. The known circuits usually use a triac. The latter is used because it provides the option of being disconnected at any arbitrary moment in the current cycle. However, the disconnection only occurs at a zero passage of the current. It is selected to use the triac as this permits simple regulation of a capacity.

One disadvantage of the triac circuit, however, is that only phase initiation and not phase cut-off is possible. Furthermore, the triac does not provide a good short-circuit protection as it can only be disconnected through zero passage of the supply current to the source. The triac can also cause interference in the environment because the edge velocity cannot be adjusted. Thus, interference suppression is only possible through the use of large coils or external filters.

The aim of the present invention is to provide a circuit in which both phase initiation control and phase cut-off control are possible.

A circuit according to the invention is therefore characterised in that between the said input and output terminals at least a first and a second driver transistor (8, 9), in particular a MOSFET, is inserted, whereby each driver transistor is provided with a source, a drain and a gate, whereby the drain on the first driver transistor is connected to the first input terminal and the drain on the second driver transistor is connected to the first output terminal, and whereby the source on each driver transistor is connectable on one side with a reference potential via a detecting device and on the other side is connected to a current zero passage detector, which current zero passage detector is provided to generate a zero passage signal when detecting current zero passage to the said source, which circuit further has a control signal generator connected to the current zero passage detector and is provided to generate a control signal consisting of a pulse sequence whose pulses have a variable pulse duration, and whereby each pulse from the control signal has a leading edge determined by a clock signal and a set value at the control unit and a falling edge determined on the basis of the zero passage signal, which control signal generator is connected to the gate on each driver transistor to supply the control signal. By using driver transistors, the capacity can be switched on and off within a few microseconds at any moment to enable rapid reaction to short-circuits which occur. The manner in which the driver transistors are connected allows the current, which the load senses to be monitored at the driver transistors source. As, further, the driver transistors are regulated by a control signal, which is determined by the clock signal, the preset control unit value and the zero passage at the source, the drive can be exerted at both the phase initiation and the phase cut-off. This phase initiation and phase cut-off principle can be adapted to non-reactive loads such as lights and to inductive loads such as, for example, motors or transformers. As the control signal is synchronised to the zero passages, the drive to the driver transistors is present so long as current flows through the load and the inductive capacity in the load is thus smoothed.

A first preferred embodiment of a circuit according to the invention is characterised in that the control signal generator has a clock signal generator to generate the clock signal, which is periodic, and which control signal generator further is provided with an incrementer to receive the clock signal, which incrementer is provided to form a rising signal each time with the clock signal period, and whereby the control unit is provided to issue a first reference value as a function of the value set by the control unit, which control signal generator further has a first comparator provided with a first input which is connected to an output from the said incrementer and a second input connected to an output from the control unit, which first comparator is provided to compare the said rising signal each time with the said first reference value and on this basis to determine a periodic trigger signal (TRIG), a leading edge of which is determined by the said rising signal attaining the said first reference value and a falling edge determined by the clock signal period. In this manner a trigger signal is generated which can be used on this basis to generate the control signal. As the potentiometer determines the first reference value, which in its turn determines the period of the trigger signal, the control signal will have a period which is likewise determined by the potentiometer and in this way negotiates the capacity delivered at the load as a function of the set control unit state.

A second preferred embodiment of a circuit according to the invention is characterised in that the said current zero passage detector has a second and a third comparator which each have a third input connected with the said source, which second and third comparator have a fourth input connected respectively to a positive and a negative reference value unit provided to deliver respectively a positive and a negative second reference value, which second and a third comparator are provided to compare the current intensity at the said source with the said positive and negative second reference value and to generate a current control pulse whenever the current intensity at the said source is within the range determined by the said positive and negative second reference value. A highly accurate determination of the current zero passage at the driver transistor source is thus possible.

The control signal generator preferably has a hold circuit provided with a first control input to supply the current control pulse and a second control input to supply the trigger signal, which hold circuit is provided to determine the said leading edge of the control signal from the said leading edge of the trigger signal and to generate the said falling edge of the control signal on the basis of the said current pulse. The control signal is thus determined from the trigger signal and the zero passage detection.

A third preferred embodiment of a circuit according to the invention is characterised in that the potentiometer unit has a buffer circuit provided with a condenser and a switch, which switch is provided to make a circuit between the said condenser and a supply source when the potentiometer unit is in open state, in order to charge the said condenser and whereby the said first reference value is determined on the basis of the charge stored in the condenser. Switch on effects are therefore discounted in the control signal.

A fourth preferred embodiment of a circuit according to the invention is characterised in that the control signal generator has a sub-circuit (SA) provided with a sub-circuit input to receive the clock signal, which sub-circuit has a clock circuit with a time base which is shorter than the clock signal period, which clock circuit is provided to start synchronously with the beginning of a clock signal period and to generate the said falling edge of the trigger signal when the time base is attained. When using loads with a capacitive effect, the occurrence of leading effects cannot be excluded. By using a clock circuit with a shorter time base, the trigger signal period can be shortened, and these leading effects in the control signal can thus be discounted.

A fifth preferred embodiment of a circuit according to the invention is characterised in that the control signal generator has an offset circuit (SD) provided with an offset circuit input to receive the trigger signal and a further offset circuit input to receive the control signal, which offset circuit is provided to determine the time which the control signal lags behind the trigger signal and to generate an offset pulse which notifies this time, which offset circuit is connected to the said potentiometer unit, which is provided to likewise determine the said first reference value on the basis of the said offset pulse. Using the offset circuit enables the control signal to be modified according to detected lag effects.

The control signal generator is preferably connected to the gate of each driver transistor via a port circuit (CA, CB), which port circuit has a port circuit input connected to the source of the driver transistors, which port circuit is provided to detect that the voltage at the source exceeds a preset threshold value and if such an excess is detected, to block the supply from the control signal to the gate. A driver transistor protection is thereby provided.

The said control signal generator preferably has a release circuit (ER) which is connected to the said error signal generator to receive the error signal, which release circuit is provided to neutralise the control signal through the operation of a received error signal. Thus it is possible to switch over to control signal neutralisation if an error is detected.

The invention will now be elucidated in greater detail from the drawing which illustrates a preferred embodiment of a circuit according to the invention. In the drawing:
figure 1 shows the circuit for the driver transistors and the error signal generator;
figure 2 shows the determination of a reference potential;
figure 3 shows a first part of the control signal generator;
figures 4, 5 and 7 show a number of signal forms of signals occurring in the circuit;
figure 6 shows a second part of the control signal generator;
figure 8 shows a release circuit as a component of the control signal generator.

In the drawing the same reference figure is allocated to the same or an analogous element.

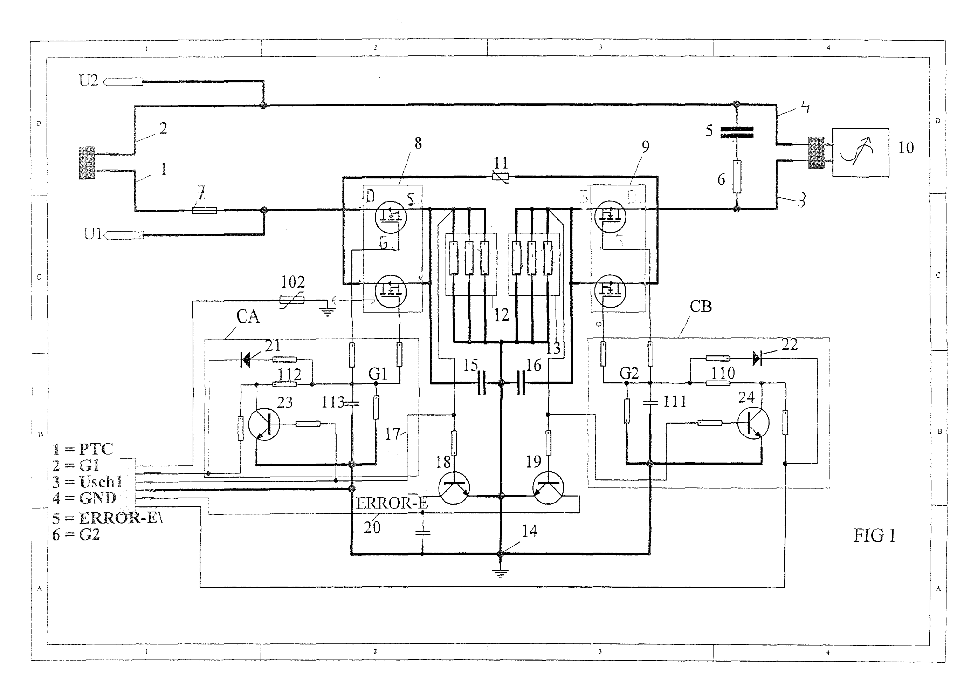

Figure 1 illustrates the supply section of the circuit for an electric power supply line according to the invention. The supply section has a first input terminal 1 and a second input terminal 2 to connect an electric alternating current, for example the 220 V, 50 Hz supply grid. The second input terminal 2 is connected to a second output terminal 4. The first input terminal is connected to the drain D of a first driver transistor 8 via a fuse 7, while the drain on a second driver transistor 9 is connected with a first output terminal 3 from the supply section. A condenser 5 and a resistance 6 are connected in series across the first and second output terminal to suppress high frequency interference pulses. Further, a load 10 is to be connected to the output terminals, which load consists, for example, of a motor or a pilot light. The load has an impedance which can exhibit an inductive or capacitive nature.

In figure 1 the first and second driver transistors 8 and 9 each have two parallel-connected MOSFET. It will also be clear that only one or more than two transistors are possible per driver transistor. Further, between the first input terminal 1 and the first output terminal 3, a varistor 11 is inserted which bridges the drains on both the driver transistors 8 and 9. This varistor reacts as a through circuit to the grid if the voltage exceeds 600 V.

The drain (D) on the second driver transistor 8 is connected to the first input terminal 1, while the drain (D) on the second driver transistor 9 is connected to the first output terminal 3. The sources (S) of the first and second driver transistor are each connected to a reference potential 14 via detecting devices 12 and 13, respectively. The sources (S) are further each connected to the same reference potential via condensers 15 and 16, respectively. In the preferred embodiment, three shunt resistors of 0. 1 Ω connected in parallel are selected as the detecting device in order to preferably obtain a value of 0.033 Ω. It will be clear, however, that other values are also possible and that, in place of a parallel circuit, a series circuit or even only one resistor can be used as shunt resistor. These shunt resistors are used to perform a current detection, but other electronic components, such as for example a coil, can also be used for this purpose. The latter determine the current value in respect to the reference potential. This current value is important for the circuit in regard to a too high start-up current, nominal current or short-circuit current in both the positive and negative current ranges.

The source of the first driver transistor 8 is further directly connected to a branch line 17 which is connected to a current zero passage detector, as will be described further in the description. Instead of connecting the source on the first driver transistor to the control signal generator, it is also possible to connect the source on the second driver transistor to the current zero passage detector. Further, the source on the first and second driver transistor are each connected via a respective resistance to the base of a first and second transistor 18 and 19, respectively, which form part of an error signal generator. The emitters on both transistors 18 and 19 are connected to the reference potential 14, while their collectors are connected to a line 20 which is connected to a release circuit. The first and second transistors 18 and/or 19 become conductive when a current (Usch 1; Usch 2) exceeding a preset threshold value exists at the source of the driver transistors. This current may be a start-up or short-circuit current or also a too high nominal current. This produces an error signal (ERROR - *É)* on line 20. The use of this error signal will be described later.

The gate (G) on each driver transistor receives a pulsed control signal G1 and G2, respectively, produced by a control signal generator. The control signal is supplied to the gate via a port circuit (CA, CB) consisting of diode 21 for G1 and diode 22 for G2. This port circuit further has a resistor 110 and 112, respectively, and a condenser 111 and 113, respectively, which are connected to the collector on transistor 23 and 24, respectively. The control signal G1 and G2 further passes via a resistor to the collector on a third and fourth transistor 24 and 24, respectively, which also form part of the port circuit. The base of these transistors 23 and 24 receive the signals Usch 1 and Usch 2, respectively, via a resistor. The emitters on transistors 23 and 24 are connected to the reference potential 14. If the signal Usch 1 or Usch 2 exceeds a preset threshold, transistor 23 or 24, respectively, becomes conductive, whereby the control signal is blocked and can no longer reach the gate of driver transistor 8 or 9, respectively, but is conducted to the reference potential via transistor 23 or 24, respectively. Thus, if too high a current is detected at the driver transistor source, the latter is prevented from remaining connected (by the control signal G1/G2. By using transistors 23 and 24, the drive to the gates can be cut off in a few µ seconds (less than 20 µs) and forced to zero. Such a direct intervention on the driver transistors drive is necessary to protect the latter against too high currents. Using the resistors 110 and 112 and the condensers 111 and 113 decreases the edge steepness and suppresses the steep edges, which cause high frequency interference, and prevents them from reaching the gate as a steep edge. This removes the need to use an interference suppression circuit consisting of large coils and condensers.

If the voltage decrease across the shunt resistors 12 or 13 becomes too great in respect to the reference potential 14, the drive to the driver transistors 8 and 9 must always be immediately shut off. This is enabled by the third and fourth transistors 23 and 24, respectively, during the respective negative and positive alternation of the supply network provided to the terminals 1 and 2. Suppose now that transistors 23 and 24 react to a base voltage of 0.7 volts. At a shunt resistance value of 0.033 Ω, this then produces a current (V = I.R.) of 21.21 A, while a base voltage of 0.6 volts already contains a current of 18.10 A as shunt current, which interrupts the drive.

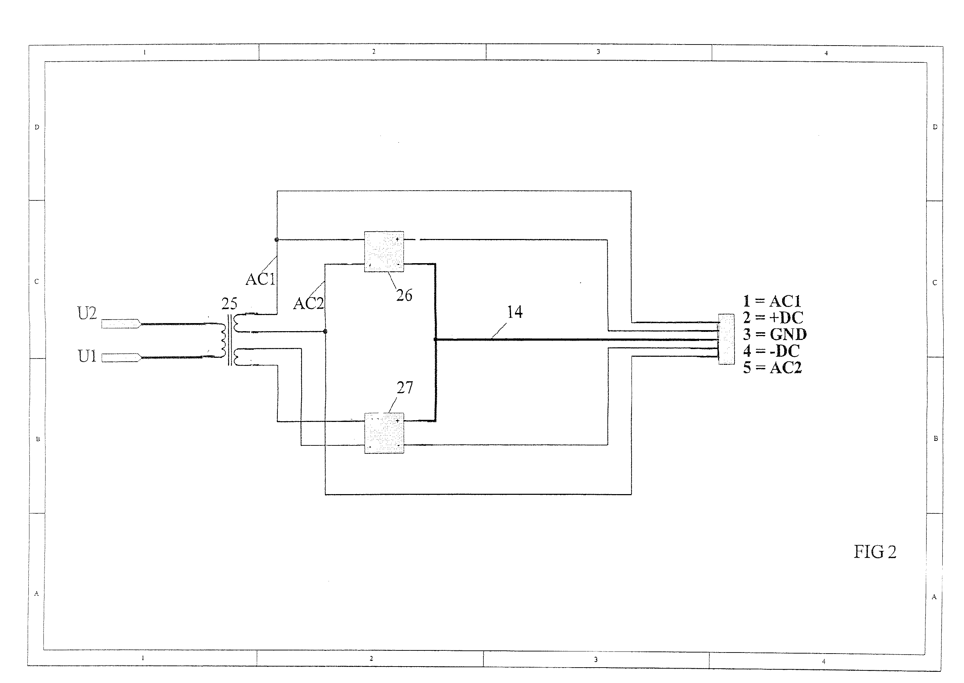

The reference potential 14 is preferably a virtual mass point which is obtained through a branching of the supply, as illustrated in figure 2. The transformer circuit in figure 2 has a transformer 25 from which a first branch is connected to a first current rectifier 26 and a second branch is connected to a second current rectifier 27. The first and second current rectifiers respectively supply a positive (+DC) and negative (-DC) direct voltage, respectively, and a common virtual mass to line 14.

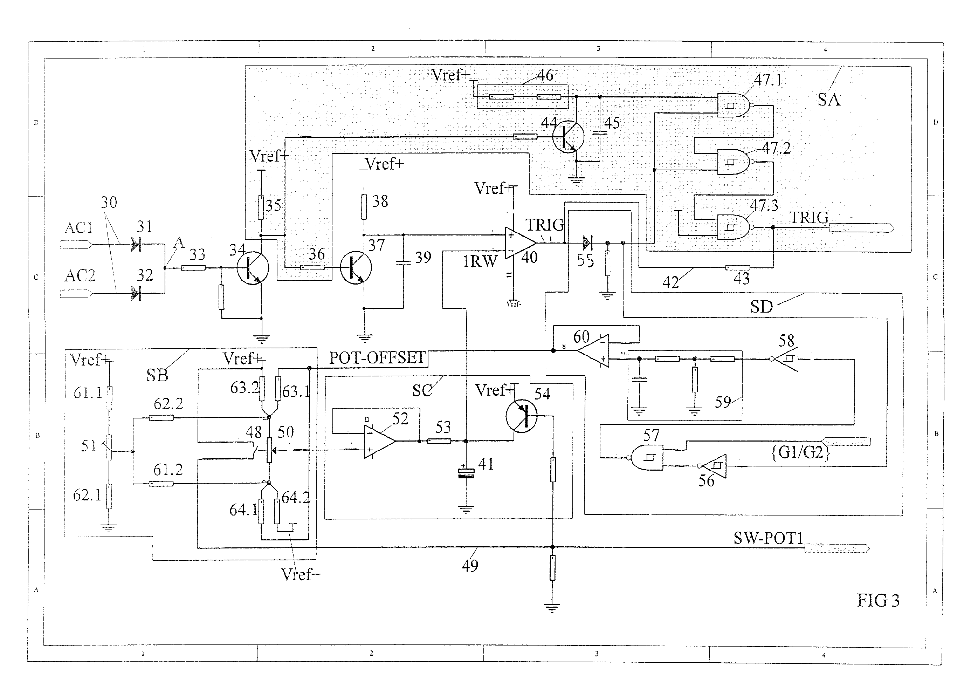

Before further describing the operation of the circuit supply section (figure 1), the current zero passage detector and the control signal generator must be described in greater detail. Figure 3 shows a first part of the control signal generator as a component of the circuit according to the invention. A clock input 30 provided by a clock signal generator is connected to the transformer 25 (figure 2) and receives the output voltage AC1 and AC2 from the first branch from this transformer. This output voltage is delivered to the respective anodes of the diodes 31 and 32, whose cathodes are connected to the base of a fifth transistor 34 via a resistor 33. The clock signal generator is a component of the control signal generator. The collector on the fifth transistor 34 is connected to a reference voltage (Vref) of for example 9 V via a resistor 35, while its emitter is attached to the reference potential 14. The collector on this fifth transistor 34 is further connected, via a resistor 36, to the base of a sixth transistor 37 whose collector is likewise connected to the reference voltage via a resistor 38. The emitter on the sixth transistor 37 is likewise connected to the reference potential. The collector on the sixth transistor 37 is connected at one side with the reference potential via a first condenser 39, preferably with a value of 220 n F, and at the other side to the plus input to a first comparator 40, whose min input is connected to a condenser 41. An output from the first comparator 40 is connected to an output line 42 into which a switching device 43 is inserted.

The control signal generator preferably further has a first sub-circuit designated SA in figure 3. This first sub-circuit is connected to the collector on the fifth transistor 34, which is connected with the base of a seventh transistor 44 via a resistor. The emitter on this seventh transistor is attached at one side to the reference potential and, at the other, to the collector on the seventh transistor, via a second condenser 45, preferably with a value of 100 n F. This latter collector is further connected to the reference voltage via a resistor 46.

The first condenser 39 and the resistor 38 form a first RC circuit, while the second condenser 45 and the resistor 46 form a second RC circuit, whose RC time is less than that of the first RC circuit. The second RC circuit is further connected with a first input to a cascade of NAND ports 47 whose second input is connected to the output from the first comparator 40. An output from the NAND ports 47 can be connected to the line 42 via the switching device 43. The switching device 43 provides the option of connecting or disconnecting the sub-circuit SA.

The control signal generator is further preferably connected with a control unit designated SB in figure 3. In the embodiment example, the control unit consists of a potentiometer circuit, but it will be clear that other embodiments are also possible, such as for example an incrementation-decrementation register. The potentiometer circuit has a switch 48, one terminal of which is connected to the reference voltage (Vref) and the other terminal to a signalling line 49 to which a potentiometer signal SW-POT1 is issued. The potentiometer switch further has a variable resistor 50 which is connected to a trimmer 51 and to the reference voltage. The potentiometer circuit is further connected to a buffer circuit SC which has an operational amplifier 52, whose plus input is connected with the output from the variable resistor 50. An output from the amplifier 52 is connected at one side to the condenser 41 via a resistor 53, and at the other side, with the collector on an eighth transistor 54, whose emitter is attached to the reference voltage and whose base receives the potentiometer signal SW-POT1. The potentiometer circuit further has resistors 61.1 and 62.1 connected in series with the trimmer 51. The resistors 62.2 and 61.2 are further connected to the input to the trimmer and to the variable resistor 50. The latter is further connected in series with the resistors 63.2 or 63.1 and with the resistors 64.1 or 64.2. The resistors 61.1, 61.2 and 63.1 are used to start with a maximum capacity, while the resistors 62.1, 62.2 and 64.2 are used to start with a minimum capacity.

The control signal generator is further preferably to be expanded with an offset circuit designated SD in figure 3. The offset circuit has a diode 55 whose anode is connected to the output from the first comparator 40. The diode 55 prevents current flowing from the offset circuit to the first comparator. The cathode on the diode 55 is connected to an input to an inverter 56 whose output is connected to a second input to a NAND port 57. A first input to the NAND port 57 receives the control signal G1/G2. An output from the NAND port 57 is connected to an input to an inverter 58 whose output is connected with the pulse input from an operational amplifier 60 via an integrator 59. The output from the operational amplifier 60 is connected to the variable resistor 50 in the potentiometer circuit.

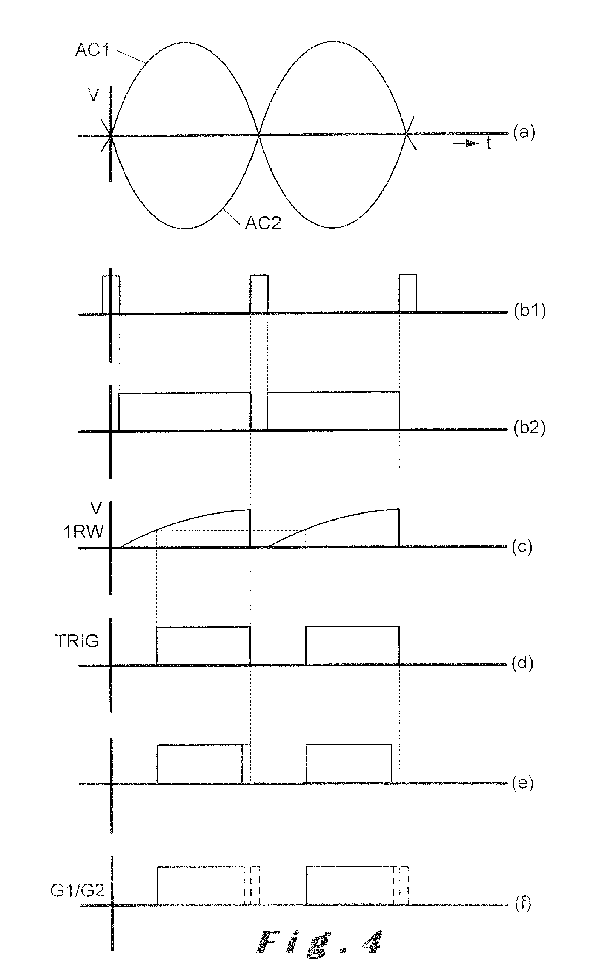

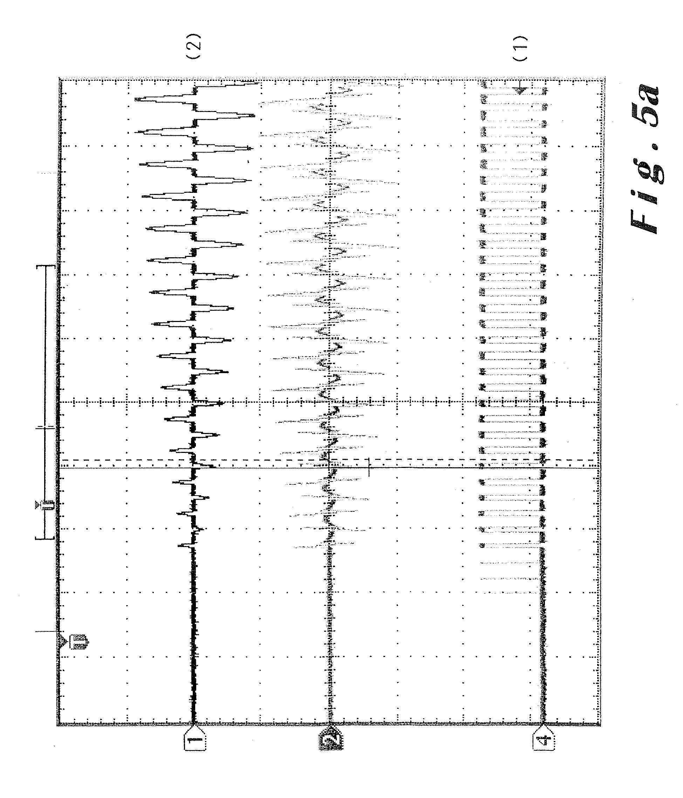

The operation of the control circuit will now also be described with reference to figure 4. Figure 4a shows two sinusoidal alternating current signals (AC1, AC2), whereby both signals are in phase opposition to one another. These alternating current signals (AC1, AC2) are generated from the first branch from the transformer 25 (see figure 2). These sinusoidal signals are issued to the clock input 30. The diodes 31 and 32 are selected and connected so as to be conductive in the event of a positive voltage higher than a threshold value and to deactivate outside of this. Thus, for example, diode 31 is conductive if AC1 increases above 0.6 to 0.7 volt, while diode 32 is conductive if AC2 exceeds a voltage of 0.6 to 0.7 volt. A clock signal (figure 4b2) which is periodic is thus generated at the output from the diodes at point A. Figure 4b1 illustrates a series synchronisation of pulses which indicate the period that the diodes deactivate, while figure 4b2 indicates the inverse of this deactivation period and thus the clock signal at point A. The frequency or period of this clock signal is naturally dependent on the frequency of the supply from which AC1 and AC2 are derived. For a frequency of for example 50 Hz, which is usual for a mains voltage in Europe, this is also 50 Hz. The period of each pulse from this clock signal is preferably 10 ms.

The clock signal is issued to the base of the fifth transistor 34, and this becomes conductive in the period of the pulse duration. The current will therefore flow from the reference voltage through the fifth transistor 34 to the reference potential in the pulse duration period. As the base of the sixth transistor 37 is connected to the collector on the fifth transistor 34, the sixth transistor 37 will be deactivated in the period that the fifth transistor 34 is conductive and vice versa. The synchronisation (sync) signal issued to the base of the sixth transistor 37 is shown in figure 4b1. As the first condenser 39 forms a first RC circuit with the resistor 38, the first condenser 39 will charge in the period that the sixth transistor 37 is deactivated, and thus form an incrementer. Thus, a continuously rising signal is issued to the plus input on the first comparator 40, synchronously with the clock signal period, as shown in figure 4c. Whenever the pulse from the synchronisation signal (sync; figure 4b1) becomes high, the sixth transistor 37 becomes conductive and the first condenser 39 discharges to the reference potential, as shown by the downwards edge in figure 4c. The rising signal formed by the incrementer is thereby cut off and reset.

A variable first reference value (1RW) is issued by the condenser 41 to the input to the first comparator 40. The comparator compares the rising voltage from the incrementer formed by the first RC circuit (38, 39) with the first reference value issued by the condenser 41. If the rising voltage (figure 4c) attains the value of the first reference value (1RW), the output from the first comparator becomes high (figure 4d) and this remains high until the sixth transistor becomes conductive and the plus input to the first comparator becomes low. How the first reference value is adjusted will be described further on. A pulsed periodic trigger signal (TRIG; figure 4d) thus exists at the output from the first comparator. The rising or leading edge of this signal is thus determined by the first reference value, while the descending or falling edge is determined by the clock signal or the synchronisation signal (sync) derived from the zero passage of the alternating current (AC1, AC2; figure 4a).

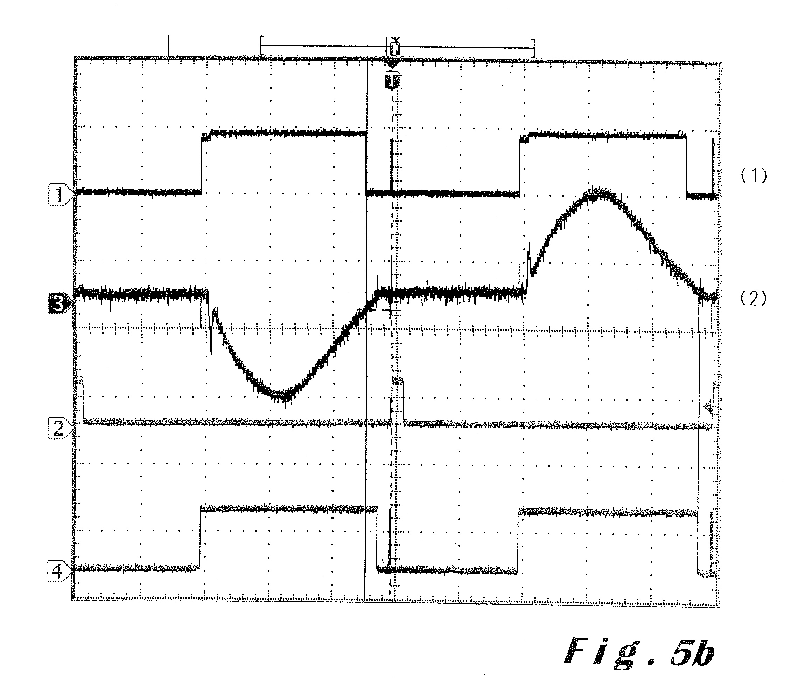

If, however, the load 10 consists of a motor which mainly displays capacitive impedance, then such a motor has the tendency to lead, which implies that the current through the motor becomes zero sooner than the supply voltage delivered (see figure 5b.2). It is then also important if such a motor is used as load that the trigger signal (TRIG) allows for this. For this purpose, the control circuit is preferably expanded with the first sub-circuit SA. As described, this first sub-circuit has a clock circuit consisting of a second RC circuit (45, 46) with a shorter RC time than the fist RC circuit. The seventh transistor 44 receives the same signal at its base as the sixth transistor 37, so that they conduct and deactivate synchronously (figures 4b1 and b2). As the RC time which forms the time base of the second RC circuit is shorter, the second condenser 45 will charge more rapidly than the first condenser 39, but they are charged before the end of the clock period is attained. The NAND port 47-1 will consequently react before the end of the clock period is attained, whereby the positive threshold value is attained at the first input to NAND port 47-1. A 1 is consequently set at the input. The trigger signal TRIG which exists at the second input to the NAND port 47-1 is likewise "1", because the first comparator already issues a trigger signal. The output from NAND port 47-1 is consequently "0" and thus also the first input to NAND port 47-2 which is connected to this. The second input to NAND port 47-2, which also receives the trigger signal TRIG, is "1", whereby a logic "1" comes to the output from NAND port 47-2 which is transmitted to the input to NAND port 47-3. The second input to NAND port 47-3 has a fixed reference value "1". Thus, as soon as there is a "1" at the first input to NAND port 47-1, the output from NAND port 47-3 becomes equal to "0" in the time that the trigger signal TRIG is high, whereby the trigger signal becomes "0" (figures 4 e and 5b.1) in the event that the switching device 43 does not transmit the trigger signal. Should the switching device 43 signal in fact transmit the signal, the subcircuit SA is inactive and the trigger signal is issued over the full pulse width. Thus, the lead amount of electric motors with a capacitive impedance is allowed for by the cut off of the trigger signal TRIG before the zero passage of the supply. It will be clear that the same control can be achieved with another logic circuit through a cascade of three NAND ports 47.

Because the velocity of motors or the emitted light intensity of lights is generally regulated by a potentiometer, the potentiometer unit SB is incorporated with the buffer circuit SC preferably as a component of the control circuit. The potentiometer unit SB incorporated in this potentiometer unit is then also the one whereby the regulation is performed. When the potentiometer 48 is in the open state, i.e. when it forms no connection and thus the load is not supplied, the line 49 is low and the PNP transistor 54, which functions as a switch, is conductive, so the condenser 41, which determines the first reference value at the first comparator 40, becomes fully charged and thus issues the maximum first reference value to the first comparator.

If the first reference value issued by the condenser 41 is high, then the first condenser 39 will need to be already considerably charged to attain this reference value and thus to cause the first comparator 40 to be connected and make the trigger signal TRIG high. As shown in figure 5a(1), in the starting phase, the pulse duration of the trigger pulse TRIG is then short.

If the potentiometer 48 is closed, the signal SW - POT 1 on line 49 is high. As the condenser 41 is fully charged, it will now function as a current source and discharge through the resistor 53 and the operational amplifier 52. The value of the resistor 53 and the operational amplifier 52 are selected such that this preferably lasts almost 3 seconds. This enables a soft start to be achieved in the start-up phase, as shown in figure 5a(2). The variable resistor 50 of the potentiometer is set by the user to the desired value. As this variable resistor 50 is connected to the operational amplifier 52, it will likewise determine the discharging of the condenser 41 and ultimately the charge in condenser 41 and thus also the first reference value issued to the first comparator 40. As the latter is determining for the pulse duration of the trigger signal TRIG, the duration of this trigger signal is thus likewise determined by the potentiometer state.

The state of the potentiometer determines the value of the potentiometer signal SW - POT1 on line 49. As through the connection of the potentiometer the signal SW - POT 1 is logic "1", the eighth transistor 54 is also deactivated as its base receives the potentiometer signal SW - POT1. Consequently, the condenser 41 is no longer charged via the eighth transistor 54. As the potentiometer is connected, and if the start is from maximum capacity, current runs via the trimmer 51 and a resistor 61.1 from the reference voltage across the resistor 61.2 and the variable resistor 50 to the operational amplifier 52 and thus to the condenser 41, which can thus discharge to the set value. Charging the condenser 41 in such a manner offers the further advantage that sudden variations imposed on the potentiometer have no direct effect on the load, as the condenser must first charge or discharge, which requires some time.

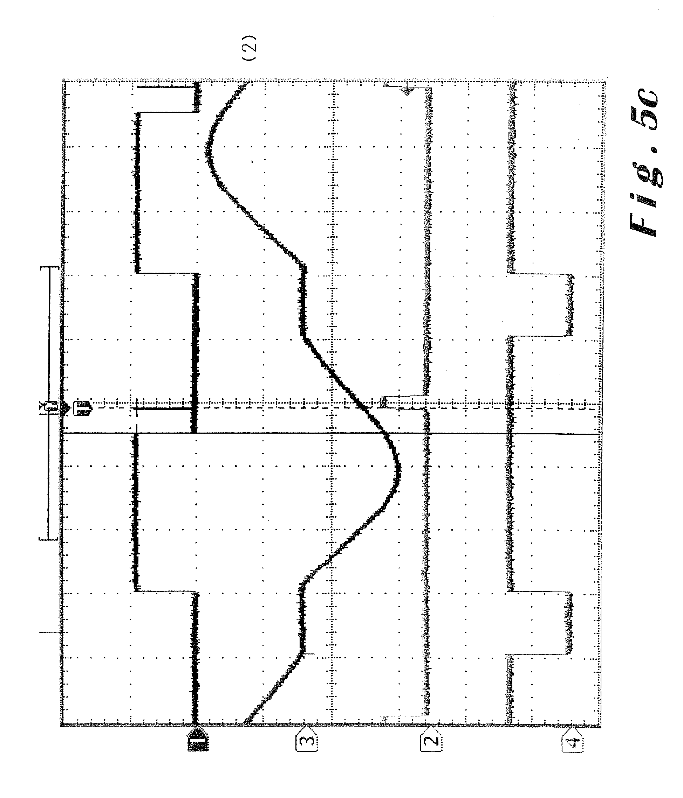

The offset circuit SD is useful if the load displays a high inductive impedance which has lag effects for the load. If a lag effect is actually involved, i.e. the load current passes through the zero point later than the zero passage of the supply current (see figure 5c.2), then this must be allowed for at the control signal G1/G2. For this purpose, the offset switch receives the control signal G1/G2 which is issued to the first input to the NAND port 57. The inverted trigger signal TRIG (via inverter 56) is issued to the second input to the NAND port 57. If, therefore, the trigger signal TRIG is high or "1" and the control signal G1/G2 is also "1", this means during the conduction phase of the driver transistors 8 and 9 (figure 1), then the output from the NAND port 57 is high or "1". The inverter 58 inverts this "1" to "0" and the integrator 59 is inactive. If the trigger signal now becomes "0" and the control signal G1/G2 remains high, then the output from the NAND port 57 becomes "0" and the output from the inverter 58 "1". The integrator will thus integrate during the time that the control signal G1/G2 remains high, while the trigger signal has already gone towards "0". If the control signal G1/G2 now goes towards "0", then the inverter output 58 also becomes "0" and stops the integration. Thus, an offset pulse (POT - OFFSET) is issued to the output from the operational amplifier 60 which indicates the time which the control signal G1/G2 lags and has thus remained "1" longer than the trigger signal TRIG. As the POT-OFFSET value is issued to the variable resistor 50 of the potentiometer, this will likewise be determining for the reference value issued by the condenser 41.

It will be clear that instead of using a NAND port, an integrator and an operational amplifier, it is also possible to determine this lag time with a microprocessor or with counters which are controlled by the control signal and the trigger signal.

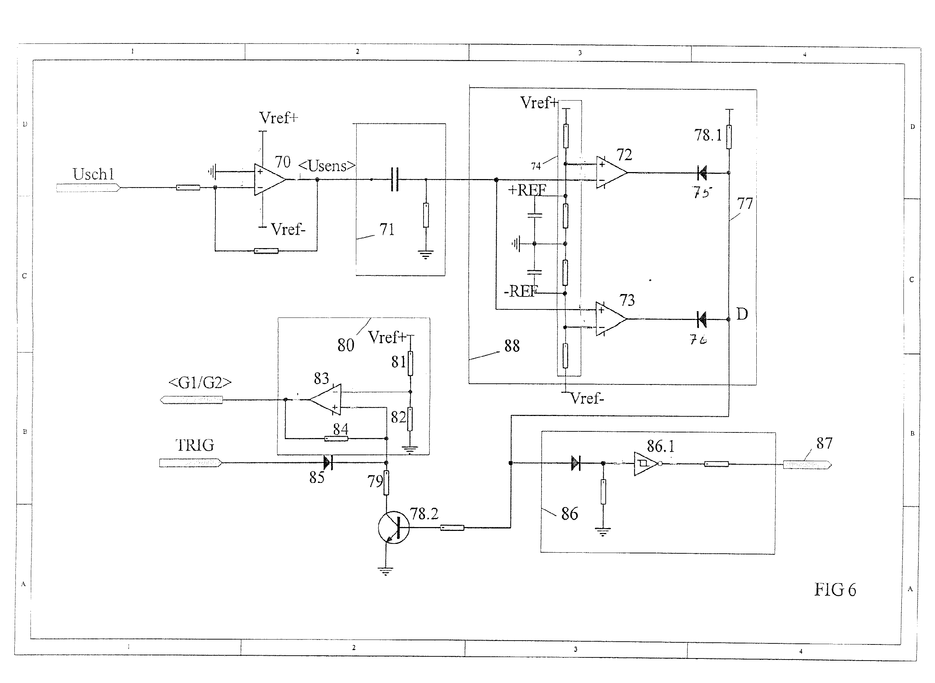

The control signal generator has, moreover, a further current zero passage detector which is illustrated in figure 6. The start-up, short-circuit or nominal current (Usch 1; see figure 1) to the source of the first driver transistor 8 is issued to the input to this current zero passage detector. This input is connected to an amplifier 70 which is provided to amplify the transmitted current signal preferably by a factor of 10. The transmitted start-up or short-circuit current may be either positive or negative, depending on the positive or negative alternation of the supply. The output from the amplifier 70 is connected to an alternating current decoupling circuit 71 which causes a galvanic decoupling between the direct voltage and the alternating current signal.

The output from the alternating current decoupling circuit 71 is connected at one side to the min input to a second comparator 72 and at the other side to the plus input to a third comparator 73. The plus input to the second comparator 72 is connected to the positive reference voltage via a voltage reducer 74, while the min input on the third comparator 73 is connected to the negative reference voltage via the voltage reducer 74. The outputs from the second and third comparators are connected to the cathodes on a diode 75, 76, respectively, whose anodes are connected to a line 77. The line 77 has a resistor 78.1 and is connected to the reference voltage and exits to the base of the transformer 78.2. The emitter on the latter is attached to the reference potential while its collector is connected to a hold circuit 80 via a resistor 79. The hold circuit has a fourth comparator 83 whose min input is connected to the reference voltage via a voltage reducer 81, 82. The plus input on the fourth comparator is connected to the collector on transistor 78.2 via resistor 79. The trigger signal TRIG is likewise attached to the plus input to the fourth comparator via a diode 85. A resistor 84 is inserted into a feedback loop between the plus input and the output from the fourth comparator. The control signal G1/G2 is then transmitted to the output from the fourth comparator. Finally, the line 77 is still connected to an input to an inverter 86.1, whose output is connected to an indicator light 87, consisting, for example, of a yellow LED.

The start-up, short-circuit or nominal current signal Usch 1 which is transmitted from the source of the driver transistor 8, is amplified by the amplifier 70, for example amplified ten times in order to have a sufficient signal level for the second and third comparators, 72, 73. As shown in the window 88, the signal Usch 1 can indicate both a positive and a negative current value, depending on the positive or negative alternation of the supply.

The circuit is constructed such that the second comparator 72 detects the positive alternation and the third comparator 73 the negative alternation. For this purpose, the voltage value at the plus input to the second comparator is + 0.018 V and at the min input to the third comparator - 0.018 V. Naturally, other values than this 0.018 V may be selected, however it is important that this value does not fluctuate too far from the 0 volt, because a zero passage of the Usch 1 signal must be detected. An absolute value of 0.03 volt is preferably regarded as the upper limit. The principal aim of this comparison with the Usch 1 signal is to check whether the current is progressing towards zero from both the positive and negative side. With the value of 0.03 volt and the choice of the voltage reducer, this produces a current value lying in the range - 38 mA to 38 mA. Naturally, this 38 mA is also an option which is linked to the option of 0.03 volt and other options will lead to other values whereby the same end may be achieved. The selected range - 38 mA ≤ i ≤38 mA is then in this embodiment also regarded as zero passage of the current to the source of the driver transistors 8 and 9. Here, the current in the phase cut-off period of the alternating current is involved, however.

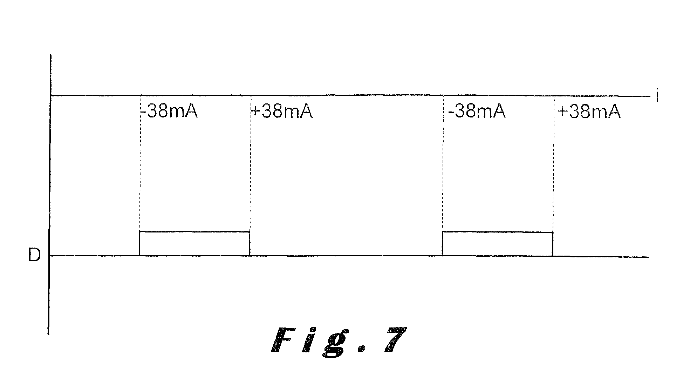

Thus, if the amplified signal Usch 1 to respectively the min input or plus input (third input) to respectively the second (72) or the third comparator (73) is respectively less than or equal to or greater than or equal to + 38 mA or - 38 mA, respectively, the comparator will switch. The output from the comparators is then positive and these deactivate the diodes 75 and 76 in the period that the output from the comparators is positive. Point D on line 77 (see figure 7) is consequently positive, namely at the reference voltage. If, however, the positive current Usch 1 to the plus input on comparator 73 or the negative current to the min input on comparator 72, respectively, are higher than + 38 mA or lower than - 38 mA, respectively, the output from respectively the third comparator 73 or the second comparator 72 is negative and current flows from the reference voltage through resistor 78.1 to the diode 65 or 77, respectively, and the current on line 77 at point D is thus equal to zero. Thus, if Usch 1 is lower than + 38 mA in the positive alternation and higher than - 38 mA in the negative alternation, the output from both the second and third comparator is positive and a positive signal is transmitted to the base of transistor 78.2 which causes this transistor to be conductive.

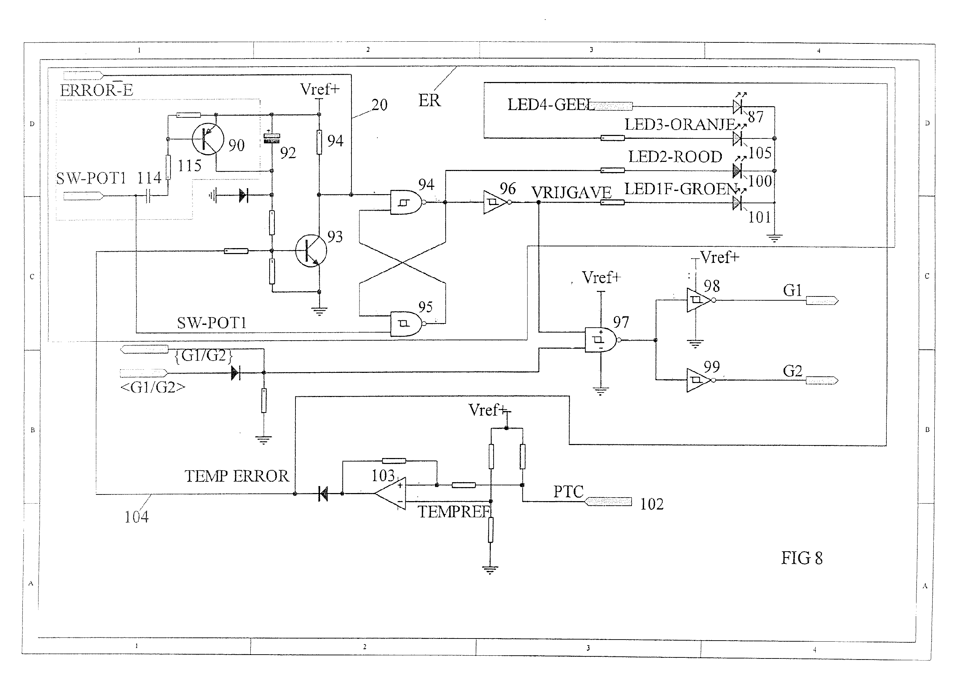

If the trigger signal TRIG (see figure 3) now becomes high, the diode 85 becomes conductive and the trigger signal is transmitted to the plus input on the fourth comparator. As this fourth comparator is connected as a hold circuit, its output becomes positive, whereby the control signal G1/G2 also becomes high and thus the driver transistors 8 and 9 are connected (figure 4f). If transistor 78.2 now becomes conductive because Usch 1 indicates a zero passage, as described earlier, the hold circuit is switched back and G1/G2 becomes zero, as shown in figure 8 a. The inductive capacity which comes from the load is thus completely smoothed past the load because the driver transistors are disconnected when the control signal attains zero. The control signal G1/G2 is indeed transmitted to the gate on the driver transistor. The control signal G1/G2 thus does not become low through a zero passage to the mains but rather if the current to the driver transistor source becomes zero.

As described in reference to subcircuit SA (figure 3), it is possible to shorten the pulse duration of the trigger signal TRIG. It can thus happen that TRIG becomes low before transistor 78.2 becomes conductive. The leading which is sometimes experienced in motors with a capacitive impedance is thereby taken into account. If the end of the trigger signal TRIG period were only determined by the clock signal, and were not to be shortened for such motors, the danger would arise that the current to the driver transistor source has already become zero, while the trigger signal still remains high and thus also the control signal G1/G2.

Also during lagging (figure 5c.2), if the trigger signal is of normal duration, the hold circuit will ensure that, although the trigger signal TRIG has already become low, the control signal G1/G2 remains high until point D becomes high.

The current indication circuit 86 which supplies the LED 87 ensures that this LED 87 remains lit as long as the load draws current, for example, if the motor is rotating. The alternating current circuit between the amplifier 70 and a second and third comparator 72 and 73 facilitates the detection of switching of the amplifier 70 so as to eliminate the offset from this.

Figure 8 shows an error monitoring and a release circuit which in a preferred embodiment also form part of the circuit according to the invention. The error monitoring circuit (ER) receives the potentiometer signal SW - POT1 existing on line 49 (figure 3). This potentiometer signal is supplied to the base of a PNP transistor 90 via a condenser and a resistor. The emitter on transistor 90 is connected to the reference voltage (Vref). The collector on this transistor 90 is connected to the base of a transistor 93 via a resistor 91. A condenser 92 is connected across the emitter and collector on the transistor 90. The plus terminal on this condenser 92 is connected to the reference voltage (Vref), while the min terminal on this is connected to the reference voltage 91. The reference voltage is further connected, via a resistor 94, to the collector on the NPN transistor 93, whose emitter is attached to the reference potential.

The collector on the transistor 93 is connected to the first input to a NAND port 94, which at a second input receives the error signal (ERROR - E) existing on line 20 (figure 1). An output from the NAND port 94 is connected to a first input to a further NAND port 95, whose output is connected to a second input to the NAND port 94. A second input to the second NAND port 95 receives the potentiometer signal SW-POT1. The output from the first NAND port 94 is further connected to an inverter 96 and to a light source 100, for example a red LED. An output from the inverter 96 is connected to a first input on a third NAND port 97, whose output is connected to two inverters 98 and 99. A second output from the third NAND port receives the control signal G1/G2. The output from the inverter 96 is also connected to a light source 101, for example a green LED.

The first and second NAND port 94 and 95 form a memory. When, after connection of the current, the circuit is under current, the condenser 92 is not yet charged. It will now charge and a signal consequently exists at the base of transistor 93. As the latter is consequently conductive, a logic "0" appears at the first input to the NAND port 94. The logic "0" at the first input to the NAND port 94 sets the latter and supplies a logic "1" to its output, which in its turn produces a logic "0" at the output from inverter 96. The logic "1" at the output from the NAND port 94 also ensures that the light source 100 will illuminate, which thus indicates that the circuit is not yet operational. Thus, in the start-up period, the circuit is non-operational which prevents switching on effects from disturbing the operation.

When now the condenser 92 is charged, however, preferably in less than 1 second, the connection to the base of transistor 93 is no longer conductive and this deactivates the transistor. A logic "1" is consequently transmitted to the first input to the NAND port 94. If the potentiometer circuit is open, SW-POT1 has the value 0, which is transmitted to the second input to NAND port 95. The output from NAND port 95 is consequently equal to 1, whereby the output from NAND port 94 becomes "0" and the output from the inverter 96 becomes "1". The light source 101 will consequently light up to indicate that the circuit is released. The control signal G1/G2 to the input to NAND port 97 is now also released by the latter. The inverters 98 and 99 act to divide the G1 and G2 components from the G1/G2 control signal. If the potentiometer circuit is closed, SW-POT1 becomes equal to "1", and consequently the value at the output from NAND port 94 is maintained.

If, however, an error message ERROR-E is transmitted to line 20 (figure 1), this implies that the signal to line 20 becomes low or logic "0". As line 20 is directly connected to the first input to the NAND port 94, a logic "0" on line 20 will immediately produce a logic "1" at the output from the NAND port 94, the circuit is consequently set and the light source 100 will illuminate. The NAND port circuit can only be reset by re-opening the potentiometer circuit (zero state).

If the potentiometer signal SW-POT1 comes to logic "0" because the potentiometer 48 (figure 3) is disconnected, a zero pulse is briefly transmitted to condenser 114 and resistor 115, and the base of transistor 90 will consequently sense the zero pulse and activate the transistor. Transistor 90 is consequently conductive and condenser 92 is short circuited. Transistor 93 is again conductive, and the starting situation recommences. Because ERROR-E is a pulsed signal, this only briefly remains at the first input to NAND port 94.

The circuit preferably also further has a temperature control unit provided with a PTC or a NTC resistor 102 (figure 1), situated close to the driver transistors 8 and 9. If, due to heat generation close to the driver transistors 8 and 9, the temperature increases, the value of the resistor 102 will change, and the current to the first input to the fifth comparator 103 will consequently also change. A reference value is provided to a second input to the fifth comparator. If the current to the first input now deviates from the reference value set at the second input, a signal is transmitted to line 104 which is supplied to base of the transistor 93. The latter consequently becomes conductive, which, as described earlier, causes the non-release of the control signal G1/G2. The output signal from the fifth comparator 103 is also issued to a third light source 105, consisting, for example, of an orange LED.

## Claims

1. Circuit for an electric power supply line comprising a first and second input terminal (1, 2) for the connection of an electric alternating current supply and a first and a second output terminal (3, 4) for the connection of a load to be supplied, which circuit further has a control unit (48, 50, 52, 41) for the adjustment of the supply to be delivered to the load, **characterised in that** between one of the said input and output terminals at least a first and a second driver transistor (8, 9), in particular a MOSFET, is inserted, whereby each driver transistor is provided with a source, a drain and a gate, whereby the drain on the first driver transistor is connected to the first input terminal, and the drain on the second driver transistor is connected to the first output terminal, and whereby the source on each driver transistor is connectable at one side with a reference potential (14) via a detecting device (12, 13), and, at the other side is connected to a current zero passage detector, which current zero passage detector is provided for the generation of a zero passage signal upon detection of a zero passage of the current at said source, which circuit further has a control signal generator connected to the current zero passage detector and provided for the generation of a control signal (G1, G2), formed by a pulse sequence whose pulses are of a variable pulse duration, and whereby each pulse from the control signal has a leading edge determined by a clock signal and a set value at the control unit, as well as a falling edge determined on the basis of the zero passage signal, which control signal generator is connected to the gate on each driver transistor to supply the control signal.

2. Circuit according to claim 1, **characterised in that** the control signal generator has a clock signal generator (31, 32, 34) for the generation of the clock signal which is periodic, which control signal, generator further has an incrementer (37, 38, 39), provided to receive the clock signal, which incrementer is provided to generate a rising signal each time with the clock signal period, and whereby the control unit (48, 50, 52, 41) is provided to issue a first reference value according to the set value from the control unit, which control signal generator further has a first comparator (40), provided with a first input which is connected with an output from the said incrementer and a second input connected with an output from the control unit, which first comparator is provided to compare the said rising signal each time with the said first reference value and on this basis to determine a periodic trigger signal (TRIG) whose leading edge is determined by the said rising signal attaining the said first reference value and a falling edge determined by the clock signal period.

3. Circuit according to claim 1 or 2, **characterised in that** the said current zero passage detector has a second and a third comparator (72, 73) each of which have a third input connected to the said source, which second and third comparator have a fourth input, connected respectively to a positive and a negative reference value unit (Vref), provided to issue respectively a positive and a negative second reference potential, which second and third comparator are provided to compare the current intensity at the said source with the said positive and negative second reference value and to generate a current control pulse each time the current intensity at the said source is within the range determined by the said positive and negative second reference value.

4. Circuit according to claims 2 and 3, **characterised in that** the control signal generator has a hold circuit (78, 80, 83) provided with a first control input to provide the current control pulse and a second control input to provide the trigger signal, which hold circuit is provided to determine the said leading edge of the control signal from the said leading edge of the trigger signal and to generate the said falling edge of the control signal on the basis of the said current pulse.

5. Circuit according to claim 3 or 4, **characterised in that** the current zero passage detector has an amplifier (70) provided for the amplification of the said current at the source.

6. Circuit according to one of the claims 2 to 5, inclusive, **characterised in that** the control unit has a buffer circuit, provided with a condenser (41) and a switch (54), which switch is provided to form a connection between the said condenser and a supply source when the potentiometer unit is in open state, to charge the said condenser, and whereby the said first reference value is determined on the basis of the charge stored in the condenser.

7. Circuit according to claim 6, **characterised in that** the said switch is provided to switch the connection, when the potentiometer is in closed state, between the said supply source and the condenser via a variable resistor, which forms part of the control unit and is adjustable.

8. Circuit according to claim 7, **characterised in that** the said variable resistor is connected to an operational amplifier (52) which is connected between the said variable resistor and the said condenser.

9. Circuit according to one of claims 2 to 8, inclusive, **characterised in that** the control signal generator has a sub-circuit (SA) provided with a subcircuit input to receive the clock signal, which subcircuit has a clock circuit (44, 45, 46, 47) with a time base which is shorter than the clock signal period, which clock signal is provided to start synchronously with the beginning of a clock signal period, and to generate the said falling edge of the trigger signal when the time base is attained.

10. Circuit according to claim 9, **characterised in that** the sub-circuit can be switched in selectively.

11. Circuit according to one of claims 2 to 8, inclusive, **characterised in that** the control signal generator has an offset circuit (SD) provided with an offset circuit input to receive the trigger signal and with a further offset circuit input provided to receive the control signal, which offset circuit is provided to determine the time which the control signal lags behind the trigger signal and to generate an offset pulse which indicates this time, which offset circuit is connected to the said control unit, which is provided to likewise determine the said first reference value on the basis of the said offset pulse.

12. Circuit according to one of claims 1 to 11, inclusive, **characterised in that** the control signal generator is connected with the gate on each driver transistor via a port circuit (CA, CB), which port circuit has a port circuit input connected to the source of the driver transistors, which port switch is provided to detect whether the voltage at the source exceeds a preset threshold value and, if such an excess is detected, to block the control signal supply to the gate.

13. Circuit according to claim 12, **characterised in that** between the port circuit input and the driver transistor gate a resistor (110; 112) and a condenser (111, 113) are inserted, which are selected so as to decrease the edge steepness of the control signal.

14. Circuit according to one of claims 1 to 13, inclusive, **characterised in that** it has an error signal generator (18, 19) from which a control input is connected to the source of the driver transistors and an output to the said reference potential (14), which error signal generator is provided to generate an error signal (ERROR-E) if the supply to the source exceeds a preset threshold value.

15. Circuit according to claim 14, **characterised in that** the said control signal generator has a release circuit (ER) which is connected to the said error signal generator to receive the error signal, which release circuit is provided to neutralise the control signal through the operation of a received error signal.

16. Circuit according to claim 6, 7 or 8, **characterised in that** the said control signal generator has a release circuit (ER) which is connected to the said control unit and is provided to neutralise the control signal if the control unit is in an open state.

17. Circuit according to one of claims 1 to 16, inclusive, **characterised in that** a temperature-sensitive resistor (102) is inserted into the circuit in such a manner that it reacts to temperature fluctuations in the said driver transistor, which temperature-sensitive resistor is connected to the control signal generator, which, further, is provided to neutralise the said control signal if the value at the temperature-sensitive resistor exceeds a threshold value.
